Europäisches Patentamt

European Patent Office

Office européen des brevets

(11) Publication number: **0 057 899**
**B1**

# EUROPEAN PATENT SPECIFICATION

(45) Date of publication of patent specification: **18.06.86**

(51) Int. Cl.⁴: **G 01 N 27/56**

(21) Application number: **82100733.3**

(22) Date of filing: **02.02.82**

(54) **Method of operating an exhaust gas sensor for an internal combustion engine and exhaust gas sensor.**

(30) Priority: **06.02.81 JP 15689/81**

(43) Date of publication of application:
**18.08.82 Bulletin 82/33**

(45) Publication of the grant of the patent:
**18.06.86 Bulletin 86/25**

(84) Designated Contracting States:
**DE FR GB IT NL SE**

(56) References cited:
EP-A-0 025 625
DE-A-2 736 451
GB-A-2 050 625
GB-A-2 052 761
US-A-3 514 377
US-A-3 650 934
US-A-3 698 384
US-A-3 699 032

APPLIED PHYSICS LETTERS, vol. 37, no. 5, 1st
September 1980, pages 494-496, New York
(USA); R.E.HETRICK et al.: "An electrochemical
transistor using a solid electrolyte"

(73) Proprietor: **Hitachi, Ltd.**
**5-1, Marunouchi 1-chome**
**Chiyoda-ku Tokyo 100 (JP)**

(72) Inventor: **Sasayama, Takao**
**2712-34, Kanesawacho**
**Hitachi-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

(56) References cited:
**IEEE TRANSACTIONS ON ELECTRON**
**DEVICES, vol. ED-29, no. 1, January 1982,**
**pages 129-132, New York (USA); R.E.HETRICK**
**et al.: "Oscillatory-mode oxygen sensor"**

Courier Press, Leamington Spa, England.

## Description

The present invention relates to a method of operating an air-fuel ratio sensor for internal combustion engines, particularly an exhaust gas sensor for air-fuel ratio control and an exhaust gas sensor which is suitable for carrying out a feedback control with the reference air-fuel ratio of the internal combustion engine being set to an air excess point higher than the stoichiometric point.

There is known an internal combustion engine provided with an exhaust gas sensor in the exhaust pipe so that the concentration of the mixture supplied to the engine is controlled on a feedback basis to maintain the constant value in response to the output of the exhaust gas sensor, as disclosed for example in JP—A—51-53126. The output of the exhaust gas sensor used in the conventional air-fuel ratio control makes a step transition at the stoichiometric point of the mixture supplied to the engine, allowing the determination of whether the mixture is richer or leaner than the stoichiometric point. In such conventional exhaust gas sensor, however, it was not possible to set the reference air-fuel ratio to a point other than the stoichiometric point.

In order to improve the fuel economy of internal combustion engines, there are cases where the air-fuel ratio of the mixture is preferably set to a point other than the stoichiometric point, and it is carried out as disclosed in the above-mentioned patent in such a way that a delay element is provided in the control circuit for making imbalance the amplitude of the swing of the air-fuel ratio across the stoichiometric point so as to offset the reference air-fuel ratio from the stoichiometric ratio.

However, this method provides a very small shift of reference air-fuel ratio, and if it is intended to make a large shift the actual air-fuel ratio needs to be swung significantly across the reference value, resulting in an instability of control. In addition, although a long term mean value of the reference value is offset from the stoichiometric air-fuel ratio, i.e. $\lambda=1$, the air-fuel ratio of the mixture supplied to the engine varies in a short period, posing problems such as instability in operation. Further EP—A 0 025 625, published on March 25, 1981 discloses a gas analysis apparatus comprising a sensor cell having an electrolytic element provided with electrode layers on opposite sides, a pump cell having an electrolytic element provided with electrode layers on opposite sides. The electrolytic elements are arranged so as to form a sealed volume of reference gas. The concentration of gas (oxygen) in this sealed volume is first made to be zero and then oxygen is poured into the volume until its concentration becomes equal to that to be measured.

From the article "An electrochemical transistor using a solid electrolyte" from R. E. Hetrick and W. C. Vassell published in Appl. Phys. Lett. Vol. 37, No. 5 (1980) pp 494—496 it is known to monitor the exhaust gas of a combustion engine by means of a sensor device comprising two electrolytic cells, each composed of a solid electrolyte element and electrode layers covering opposing surface of this element.

These electrolyte elements enclose a volume of gas in a sealed manner. The known device is incorporated in a circuit biasing both electrolytic cells in the same manner as a bipolar transistor.

Accordingly, it is an object of the present invention to provide a method of operating an exhaust gas sensor enabling said sensor to respond at a desired point leaner than the stoichiometric air-fuel ratio and which allows to adjust arbitrarily the sensing point of the exhaust gas sensor so as to allow the setting of the reference value which best meets the requirements of the engine from the view points of fuel economy and detoxification of the exhaust gas.

It is another object to provide an air fuel ratio detector capable of adjusting the sensing point of the exhaust gas sensor so as to allow the setting of the reference value which best meets the requirement of the engine from the view points of fuel economy and detoxification of the exhaust gas.

According to the invention these objects are achieved by a method of operating an exhaust gas sensor and an exhaust gas sensor as defined in claims 1 and 2, respectively.

The present invention will be apparent from the following detailed description taken in conjunction with the accompanying drawings, in which:

Figure 1 is a schematic illustration explaining the principle of the exhaust gas sensor according to the present invention;

Figure 2 is a graphical representation showing the relationship between the air-fuel ratio of the mixture supplied to the engine and the oxygen partial pressure in the exhaust gas;

Figure 3 is a graphical representation showing the relationship between the excitation voltage and the air-fuel ratio at which the output makes a transition in its polarity demonstrated by the exhaust gas sensor according to the present invention;

Figure 4 is a graphical representation showing the output characteristics of the exhaust gas sensor according to the present invention;

Figure 5 is a side view partially in section showing the exhaust gas sensor embodying the present invention;

Figure 6 is a cross sectional side view showing schematically an embodiment of the exhaust gas sensor according to the present invention; and

Figure 7 is a circuit diagram showing the arrangement of the engine control system provided with the exhaust gas sensor according to the present invention.

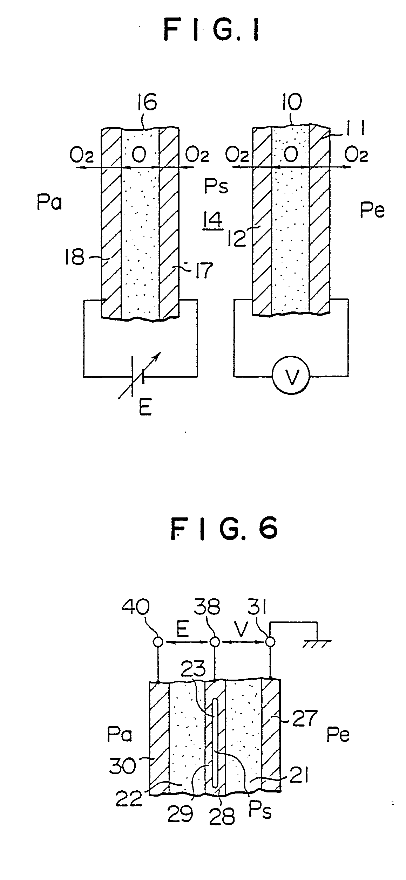

Figure 1 is an illustration explaining the principle of the present invention, in which one side of a first solid electrolyte 10 is exposed to the exhaust gas through a platinum electrode layer 11, while another side is exposed to a volume of reference gas 14 through a platinum electrode 12. One side of a second solid electrolyte 16 is exposed to the volume of reference gas 14 through a platinum electrode 17, while another side is exposed to the atmospheric air through platinum electrode 18. The volume of reference gas 14 is isolated from other volumes by the first and second solid electrolytes 10 and 16.

It is known as the Nernst's equation that the voltage generated between the platinum electrodes 11 and 12 is given as a function of the oxygen partial pressures in the exhaust gas, Pe; in the volume of reference gas Ps, as follows.

$$V = \frac{RT}{4F} \ \ln \ \frac{P_e}{P_s} \qquad (1)$$

where R is the gas constant, F is the Faraday's constant and T is the temperature of the solid electrolytes.

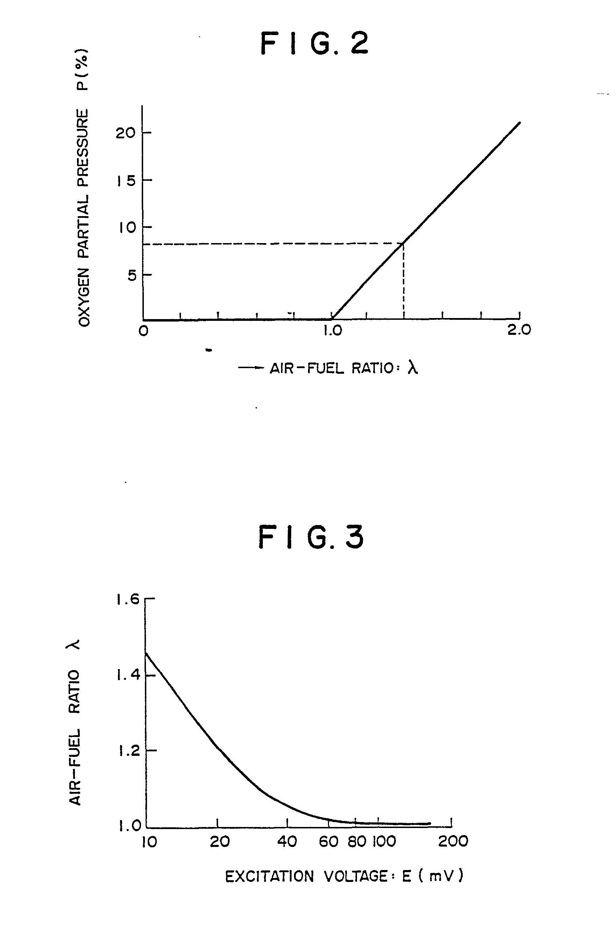

On the other hand, the oxygen partial pressure in the exhaust gas, Pe, is a function of the concentration of the mixture supplied to the engine, i.e., here the air-fuel ratio (or the air excess factor) $\lambda$, as shown in Fig. 2. That is, Pe remains zero in the range of $\lambda \leqq 1$, and it increases in proportion to $\lambda$ in the range of $1 < \lambda$. Accordingly, the oxygen partial pressure in the exhaust gas in the case of $\lambda = 1.2$ is given by: $0.2 \times Pa$ (where Pa is the oxygen partial pressure in the atmospheric air).

Assuming that the oxygen partial pressure in the volume of reference gas 14, Ps, is set to $0.2 \times Pa$, the output voltage V in equation (1) becomes zero. As can be seen from equation (1), when the oxygen partial pressure in the exhaust gas, Pe, is equal to that in the volume of reference gas Ps, the output voltage V is zero irrespective of the ambient air temperature T. In other words, by setting the oxygen partial pressure in the volume of reference gas 14, Ps, to the value corresponding to the desired air-fuel ratio (or air excess factor) $\lambda$ and by adjusting the $\lambda$ of the mixture supplied to the engine so that the output voltage V becomes zero, the engine can be operated at the desired air-fuel ratio (or air excess factor).

The Nernst's equation (1) is reversible, and when a voltage E is applied to the electrode with the platinum electrode 18 on the atmospheric air side being positive and with the platinum electrode 17 on the volume of reference gas side being negative, while maintaining the second solid electrolyte 16 isolating the volume of reference gas 14 from the atmospheric air at a high temperature of around 500°K, oxygen molecules in the neighborhood of the platinum electrode 17 are ionized by the catalytic action of platinum. The ionized oxygen molecules are attracted in the electric field to the anode, i.e. the platinum electrode 18, which separates electrons from the ionized molecules and releases oxygen molecules. Accordingly, oxygen molecules in the volume of reference gas apparently move to the atmospheric air, resulting in a fall of the oxygen partial pressure in the volume of reference gas 14. The oxygen partial pressure in the atmospheric air, Pa, and that of the volume of reference gas 14, Ps, will reach the equilibrium in the following relationship to the applied voltage E:

$$\frac{P_a}{P_s} = e \left( \frac{4 \cdot E \cdot F}{R \cdot T} \right) \qquad (2)$$

where $e$ is the base of the natural logarithm.

This means that the oxygen partial pressure in the volume of reference gas 14, Ps, in a state of equilibrium is varied by the adjustment of the application voltage E.

The oxygen partial pressure in the exhaust gas, Pe, has the following relationship to the air-fuel ratio (or air excess factor) $\lambda$ of the mixture supplied to the engine.

$$P_e = P_a \cdot (\lambda - 1) \qquad (3)$$

where $\lambda \geqq 1$, or

$$P_e = 0 \qquad (4)$$

where $\lambda < 1$.

An air-fuel ratio (or air excess factor) $\lambda$ of larger than or equal to $1 (\lambda \geqq 1)$ results in a less production of unreacted hydrocarbons and carbon monoxide and also in a satisfactory fuel economy. Therefore, air-fuel ratio control in this range of $\lambda$ needs the consideration of only the case of equation (3) for obtaining the oxygen partial pressure in the exhaust gas, Pe. From equations (1) and (3), the output voltage V can be expressed as follows.

$$V = \frac{R \cdot T}{4 \cdot F} \cdot \ln \frac{Pa(\lambda - 1)}{P_s} \qquad (5)$$

For the polarity of voltage, the volume of reference gas side is assumed to be positive. Using equation (2), the above equation (5) is reduced to as follows.

$$V = \{E + \frac{R \cdot T}{4 \cdot F} \cdot \ln(\lambda - 1)\} \qquad (6)$$

Since the term $\ln(\lambda - 1)$ is less than zero when $\lambda$ is larger than one $(\lambda > 1)$, the polarity of the output voltage V between the electrodes 11 and 12 is determined depending on the air-fuel ratio (or air excess factor) $\lambda$ and the application voltage E.

Figure 3 shows the value of $\lambda$ plotted against the applied excitation voltage E at which the output voltage V makes a transition in its polarity. This means that with the application of an excitation voltage E shown on the abscissa of Fig. 3 across both sides of the solid electrolyte 16 which partitions the atmospheric air and the volume of reference gas 14, the polarity of the output voltage generated between the electrodes on both sides of the solid electrolyte partitioning the volume of reference gas 14 and the exhaust gas is reversed at a value of λ shown on the ordinate. For example, with an excitation voltage of 20 mV, the output voltage V reverses its polarity at λ=1.2, then becomes zero at a certain value of λ.

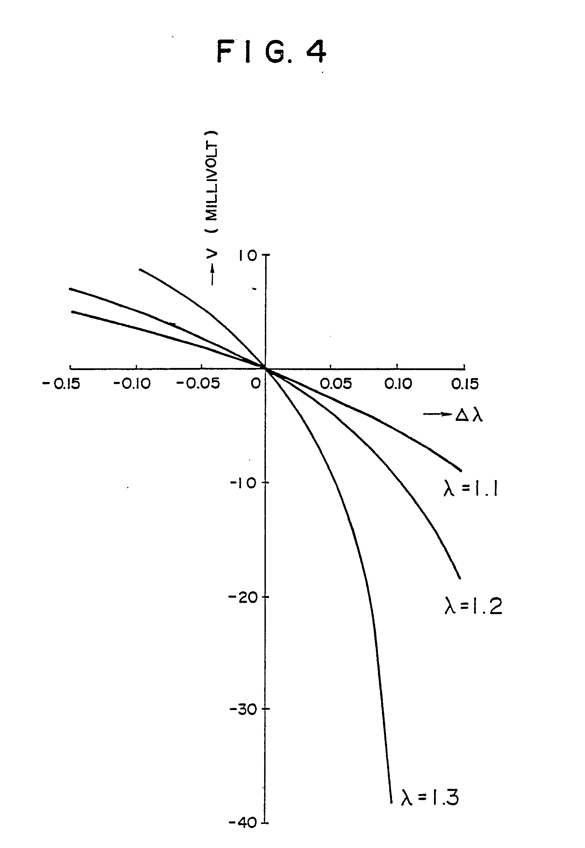

Figure 4 shows the variation of the output voltage V with respect to the air-fuel ratio (or air excess factor) λ of the mixture supplied to the engine. Figure 4 is plotted with parameters being of the air-fuel ratio (or air excess factor) λ specified as a function of the excitation voltage E in Fig. 3, while the abscissa representing the deviation of λ from the specified value. The output voltage V is assumed to be positive on the electrode exposed to the volume of reference gas.

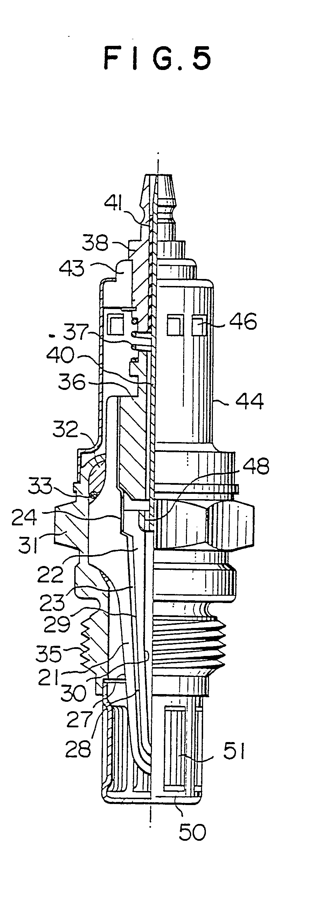

Figure 5 shows in detail the structure of the exhaust gas sensor based on the principle as described above. A first and second solid electrolyte elements 21 and 22 are each formed in a shape of tubular sack, and the second solid electrolyte element 22 is inserted inside of the first solid electrolyte element 21 with a volume of reference gas 23 accommodated therebetween. The upper base section of the second solid electrolyte element 22 has a larger diameter so that it is in press contact with the interior wall of the first element 21 through an electroconductive sealing layer 24 by which the volume of reference gas 23 is isolated from both the atmospheric air and the exhaust gas.

The first and second solid electrolyte elements 21 and 22 are formed by sintering zirconium oxide which has been stabilized by yttrium oxide. On both sides of these solid electrolyte elements 21 and 22, there are formed thin porous platinum electrodes 27, 28, 29 and 30. The first solid electrolyte element 21 is press secured to the interior wall of a metallic plug body 31 through sealing powder 32 and a metal seal 33, and the electrode 27 is electrically conductive to the metallic plug body 31. The electrodes 28 and 29 of the first and second solid electrolytes 21 and 22, respectively, are conductive to the conductive sealing layer 24 so that the electrodes are connected electrically to a second terminal 38 through a contact rod 36 and a spring 37 secured to the sealing layer 24. The electrode 30 inside of the second solid electrolyte 22 is connected to the bottom end of a first terminal 40. The upper section of the first terminal 40 is supported by the interior wall of an insulation sleeve 41. The exterior wall of the terminal 38 is secured to the upper section of the metallic plug body 31 by means of a bushing 43 and a shell 44. The shell 44 is provided with ventilation holes 46 so that the atmospheric air can access to the interior of the second solid electrolyte element 22 through these holes and through a space inside of the rod 36 and a small orifice 48 provided at the bottom of the terminal 40, thereby establishing an atmospheric environment inside the element 22. A shield 50 for protecting the bottom end of the first solid electrolyte element 21 is welded onto the bottom of the metallic plug body 31, and the shield 50 is provided with a number of slits 51 for introducing the exhaust gas. The exhaust gas sensor structured as described above is screwed into the wall of the exhaust manifold of the engine by means of the thread section 35 formed on the outside of the metallic plug body 31. The electrode 27 of the first solid electrolyte element 21 is then grounded to the exhaust manifold. An excitation voltage E is applied between the first terminal 40 and the second terminal 38, and an output voltage V will appear between the second terminal 38 and the ground. The output voltage V is used to control the air-fuel ratio (or air excess factor) λ of the mixture supplied to the engine.

What must be particularly noted here is that the first and second solid electrolyte elements 21 and 22 are formed by sintering zirconium oxide stabilized by yttrium oxide as mentioned previously, but these electrolyte elements are formed with higher density and larger thickness as compared with the conventional oxygen sensor using a porous solid electrolyte layer. Therefore, these electrolyte elements 21 and 22 can transmit ionized oxygen, i.e., movement of electrons, but have no holes large enough for oxygen molecules to pass, thereby isolating the reference gas layer 23 from other gas layers. Consequently, these electrolyte elements 21 and 22 do not need a precise forming for the thickness, but meet the requirement merely by being formed in relatively large thickness, thereby facilitating the manufacturing.

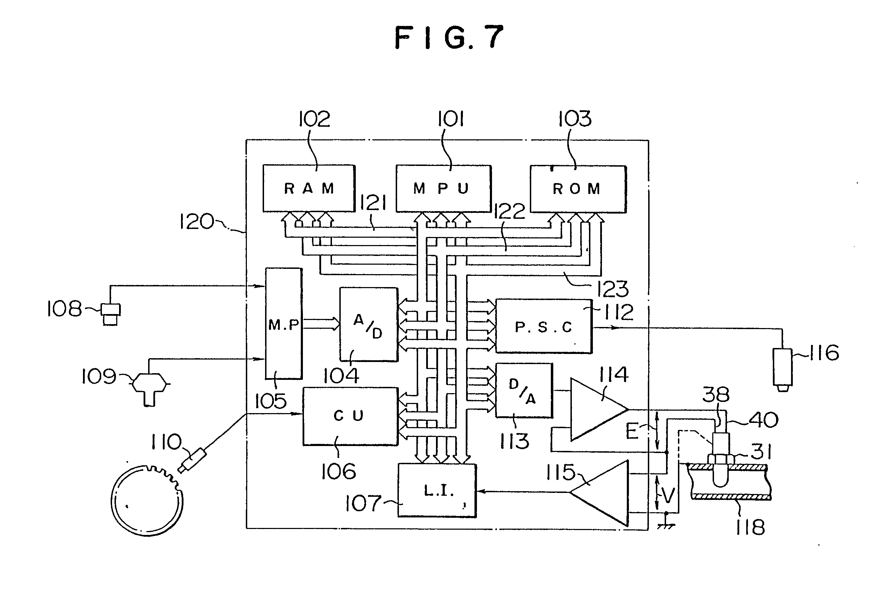

Next, the following describes with reference to Fig. 7 the apparatus for controlling the air-fuel ratio (or air excess factor) of the mixture supplied to the engine by use of the exhaust gas sensor shown in Fig. 5. Figure 7 shows the hardware arrangement of the engine control system employing a microcomputer. The exhaust gas sensor according to the present invention is mounted across the wall of the exhaust pipe 118, with its first and second terminals 40 and 38 being connected to the output of a differential amplifier 114 and the input of a comparator 115, respectively. The metallic plug body 31 provides a common potential by being grounded through the exhaust pipe 118. However, the metallic plug body 31 is preferably connected through a lead wire to the control unit 120 as shown by the dashed line, in order to avoid a potential difference caused by the distance grounding points emerging in the signal. The control unit 120 is principally made up of a microprocessor unit (MPU) 101, a random access memory (RAM) 102 and a read only memory (ROM) 103, and further comprises an A/D converter 104, a counter 106, a logical input port 107 and a preset counter 112. These components are interconnected through an address bus 121, a data bus 122 and a control bus 123. The analog signals from the coolant water temperature sensor 108, the intake manifold pressure sensor 109, and the like are delivered to the A/D converter via a multiplexer 105. The fuel injection valve 116 is activated in response to the output of the preset counter 112 so that fuel is injected into the engine. The opening duration of the injection valve is determined based on information such as the intake manifold pressure, the rotational speed of the engine and the coolant temperature obtained by a pressure sensor 109, a rotational speed pickup 110 and a coolant temperature sensor 108, respectively, and also on the mass of air taken into the engine calculated using the MPU 101, so that the optimum amount of fuel which meets these conditions is supplied to the engine. The air-fuel ratio (or air excess factor) λ of the mixture caused by the amount of fuel as determined in such way is substantially equal to the expected value. However, the expected value is obtained by the equation with predetermined parameters, and therefore the characteristics of the aged sensors and actuators can vary the value of λ of the mixture.

In order to solve this problem, the exhaust gas sensor is used to check whether the oxygen partial pressure in the engine exhaust gas, Pe, is equal to the predetermined value, i.e., the oxygen partial pressure in the reference gas layer 23, Ps. This determination is carried out by the comparator 115 which checks whether or not the signal from the terminal 38 is zero. If Pe is found larger than Ps, i.e., λ is too large, the duration of a pulse applied to the fuel injection valve 116 is corrected to increase in response to the signal coming through the logical input port 107.

The excitation voltage E applied between the terminals 38 and 40 of the exhaust gas sensor is provided from the differential amplifier 114 which makes reference to the voltage corresponding to the optimum value of λ (predetermined from the characteristic of Fig. 3) which has been preset in a D/A converter 113. With the exhaust gas sensor at an operating temperature around 600°K, the oxygen partial pressure in the reference gas layer 23, Ps, has a value corresponding to the desired value of λ, and thus the value of λ of the mixture supplied to the engine can be brought to the desired value in a feedback control which maintains the output voltage V on the terminal 38 within the range where the polarity of the voltage makes a transition.

It has been described for the exhaust gas sensor of Fig. 5 that a desired value of the oxygen partial pressure of the reference gas layer 23, Ps, is obtained by the voltage E applied to the electrodes 29 and 30 without delay. In fact, however, there is a delay depending on the moving speed of oxygen ions in the second solid electrolyte 22, the moving speed of oxygen ions in the first solid electrolyte 21 and the volume of the reference gas layer 23. The larger the volume of the gas layer 23, the longer will be the delay, and therefore the gas layer 23 should preferably be as small as possible. In the embodiment shown in Fig. 6, the solid electrolytes are shaped so that the exterior wall of the inner electrolyte 22 is in contact with the interior wall of the outer electrolyte 21, and they are sintered with a porous layer of platinum paste applied therebetween, whereby a volume of reference gas can be established inside porosities formed in the platinum electrodes. In this case, the platinum electrode layer is exposed to the atmospheric air, this air penetrates through the layer, causing unexpected oxygen partial pressure against the application of the excitation voltage, and therefore the electrode feedthrough must be sealed completely.

In order to speed up the movement of oxygen ions in the solid electrolyte 22, it is possible to determine if the oxygen partial pressure in the volume of reference gas 23 is at the desired value by applying a higher excitation voltage intermittently while measuring the voltage generated between the electrodes 27 and 28 in the absence of the excitation voltage, thereby controlling Ps to become the desired value by varying the magnitude of the excitation voltage or the application period. In this case, the ambient temperature of the exhaust gas sensor must be maintained substantially constant, otherwise, the oxygen partial pressure Ps cannot be detected by measurement of the voltage between the electrodes 27 and 28.

By means of the method and the sensor of the present invention, the air-fuel ratio (or air excess factor) λ of the mixture supplied to the engine can be maintained at an arbitrary point larger than 1 (λ>1) in feedback control, whereby the engine can be operated at a point of the best fuel economy and the most satisfactory state of the exhaust gas.

**Claims**

1. A method of operating an exhaust gas sensor for an internal combustion engine, said sensor detecting the concentration of oxygen in an exhaust gas produced by the engine and comprising:

a first electrolytic cell having a first solid electrolytic element (10; 21) provided with electrode layers (11, 12; 27, 28) on opposite sides thereof,

a second electrolytic cell having a second solid electrolytic element (16; 22) provided with electrode layers (17, 18; 29, 30) on opposite sides thereof,

the first and second solid electrolytic elements being arranged so as to form a sealed volume (14; 23) of reference gas therebetween, one of the electrode layers of each electrolytic element being exposed to this reference gas, the method being characterized by exposing the other electrode layer of the second electrolytic element (16, 22) to atmospheric air and applying a bias voltage across said second electrolytic cell in order to set the oxygen concentration in the sealed volume (14; 23) of reference gas to a value corresponding to a predetermined air-fuel ratio supplied to the engine, and by measuring the variation in the output voltage of the first electrolytic cell in response to the difference between, on the one hand, the oxygen concentration in the exhaust gas environing the other electrode of the first solid electrolytic element (10; 21) and, on the other hand, the oxygen concentration set in the sealed volume of reference gas, whereby the air/fuel ratio in the exhaust gas is detected.

2. An exhaust gas sensor for an internal combustion engine, said sensor detecting the concentration of oxygen in an exhaust gas produced by the engine and comprising:

a first electrolytic cell having a first solid electrolytic element (21) provided with electrode layers (27, 28) on opposite sides thereof,

a second electrolytic cell having a second solid electrolytic element (22) provided with electrode layers (29, 30) on opposite sides thereof,

the first and second solid electrolytic elements being arranged so as to form a sealed volume (23) of reference gas therebetween, one of the electrode layers of each electrolytic element being exposed to the reference gas, the sensor being characterised in that the sealed volume is formed by a porous electrode layer sandwiched between the first and second electrolytic elements, thereby acting as the one electrode layer of each of said electrolytic elements, said elements having a density sufficient to exclude diffusion of oxygen molecules.

## Patentansprüche

1. Verfahren zum Betrieb eines Abgasfühlers für eine Brennkraftmaschine, der die Sauerstoffkonzentration in den von der Maschine erzeugten Abgasen erfaßt und aufweist: eine erste elektrolytische Zelle mit einem ersten Trockenelektrolytelement (10; 21), dessen entgegengesetzte Seiten mit Elektrodenschichten (11, 12; 27, 28) versehen sind, eine zweite elektrolytische Zelle mit einem zweiten Trockenelektrolytelement (16; 22), dessen entgegengesetzte Seiten mit Elektrodenschichten (17, 18; 29, 30) versehen sind,

wobei das erste und das zweite Trockenelektrolytelement so angeordnet sind, daß sie zwischen sich ein dichtes Referenzgas-Volumen (14; 23) bilden und jeweils eine Elektrodenschicht jedes Trockenelektrolytelements diesem Referenzgas ausgesetzt ist, dadurch gekennzeichnet,

daß die andere Elektrodenschicht des zweiten Elektrolytelements (16, 22) atmosphärischer Luft ausgesetzt und eine Vorspannung an die zweite elektrolytische Zelle angelegt wird, um die Sauerstoffkonzentration in dem dichten Referenzgas-Volumen (14; 23) auf einen Wert einzustellen, der einem vorbestimmten, der Maschine zugeführten Kraftstoff-Luft-Verhältnis entspricht, und daß die Änderung der Ausgangsspannung der ersten elektrolytischen Zelle aufgrund der Differenz zwischen einerseits der Sauerstoffkonzentration in dem die andere Elektrode des ersten Trockenelektrolytelements (10; 21) umgebenden Abgas und andererseits der in dem dichten Referenzgas-Volumen eingestellten Sauerstoffkonzentration gemessen und dadurch das Kraftstoff-Luft-Verhältnis im Abgas erfaßt wird.

2. Abgasfühler für eine Brennkraftmaschine, der die Sauerstoffkonzentration in den von der Maschine erzeugten Abgasen erfaßt und aufweist:

eine erste elektrolytische Zelle mit einem ersten Trockenelektrolytelement (21), dessen entgegengesetzte Seiten mit Elektrodenschichten (27, 28) versehen sind,

eine zweite elektrolytische Zelle mit einem zweiten Trockenelektrolytelement (22), dessen entgegengesetzte Seiten mit Elektrodenschichten (29, 30) versehen sind, wobei das erste und das zweite Elektrolytelement so angeordnet sind, daß sie zwischen sich ein dichtes Referenz-gas-Volumen (23) bilden und jeweils eine der Elektrodenschichten jedes Elektrolytelements dem Referenzgas ausgesetzt ist, dadurch gekennzeichnet,

daß das dichte Volumen durch eine zwischen dem ersten und dem zweiten Elektrolytelement sandwichartig eingeschlossene poröse Elektrodenschicht gebildet ist, die somit als die jeweils eine Elektrodenschicht jedes Elektrolytelements wirkt, wobei die Elemente eine hinreichende Dichte haben, um eine Diffusion von Sauerstoffmolekülen auszuschließen.

## Revendications

1. Procédé pour fair fonctionner un capteur des gaz d'échappement pour un moteur à combustion interne, ledit capteur détectant la teneur en oxygène dans des gaz d'échappement produits par le moteur et comportant:

une première cellule à électrolyse possédant un premier élément électrolytique solide (10; 21) muni de couches formant électrodes (11, 12; 27, 28) situés sur des côtés opposés de cette cellule, une seconde cellule à électrolyse possédant un second élément électrolytique solid (16; 22) muni de couches formant électrodes (17, 18; 29, 30), sur des côtés opposés de ladite cellule,

les premier et second éléments électrolytiques solides étant disposés de manière à former entre eux un volume étanche (14; 23) d'un gaz de référence, l'une des couches formant électrodes de chaque élément électrolytique étant exposée à ce gaz de référence, le procédé étant caractérisé en ce qu'il consiste à exposer l'autre couche formant électrode du second élément électrolytique (16, 22) à l'air atmosphérique et à appliquer une tension de polarisation aux bornes de ladite cellule à électrolyse de manière à régler la teneur en oxygène dans le volume étanche (14; 23) du gaz de référence à une valeur correspondant à un rapport air-carburant prédéterminé envoyé au moteur, et à mesurer la variation de la tension de sortie de la première cellule à électrolyse en réponse à la différence entre d'une part la teneur en oxygène présent dans les gaz d'échappement entourant l'autre électrode du premier élément électrolytique solide (10; 21) et d'autre part la teneur en oxygène réglée dans le volume étanche du gaz de référence, ce qui permet de détecter le rapport air/carburant dans les gaz d'échappement.

2. Capteur des gaz d'échappement pour un moteur à combustion interne, ledit capteur détectant la teneur en oxygène dans des gaz d'échappement produits par le moteur et comportant:

une première cellule à électrolyse comportant un premier élément électrolytique solide (21) muni de couches formant électrodes (27, 28) sur des côtés opposés de ladite cellule,

une second cellule à électrolyse possédant un second élément électrolytique (22) muni de couches formant électrodes (29, 30) situées sur des côtés opposés de cette cellule,

les premier et second éléments électrolytiques solides étant disposés de manière à former entre eux un volume étanche (23) d'un gaz de référence, l'une des couches de chaque élément électrolytique étant exposée au gaz de référence, le détecteur étant caractérisé en ce que le volume étanche est formé par une couche formant électrode poreuse prise en sandwich entre les premier et second éléments électrolytiques, en agissant de ce fait en tant que seconde couche formant électrode de chacun desdits éléments électrolytiques, lesdits éléments possédant une densité suffisante pour exclure toute diffusion de molécules d'oxygène.

# F I G. 1

# F I G. 6

# F I G. 2

OXYGEN PARTIAL PRESSURE   P (%)

→ AIR-FUEL RATIO: λ

# F I G. 3

AIR-FUEL RATIO   λ

EXCITATION VOLTAGE: E ( mV )

2

# F I G. 4

# F I G. 5

# FIG. 7

0 057 899